# EUROPEAN PATENT SPECIFICATION

(11) **EP 2 967 765 B1**
(45) Date of publication and mention of the grant of the patent: **17.04.2019**
(21) Application number: 14769219.8
(22) Date of filing: 12.03.2014
(51) Int. Cl.: A61C 8/00, A61K 6/04

(54) **TWIST LOCK INTERFACE FOR ABUTMENT AND IMPLANT ASSEMBLY**
TWISTLOCK-SCHNITTSTELLE FÜR WIDERLAGER UND IMPLANTATANORDNUNG
INTERFACE DE VERROU TOURNANT POUR ENSEMBLE BUTÉE ET IMPLANT

(30) Priority: 14.03.2013 US 201313804800
(43) Date of publication of application: 20.01.2016
(73) Proprietor: Biomet 3i, LLC, Palm Beach Gardens, FL 33410 (US)
(72) Inventor: BELLANCA, John, J., West Palm Beach, Florida 33412 (US)
(74) Representative: Mays, Julie
(86) International application number: PCT/US2014/024753
(87) International publication number: WO 2014/151010

(56) References cited:
- EP-A1- 2 361 586
- CH-A1- 704 382
- FR-A1- 2 882 919
- JP-A- 2006 075 427
- US-A- 5 733 122
- US-A1- 2008 160 483
- US-A1- 2011 306 014
- US-B1- 6 663 389
- US-B1- 6 663 389

## Description

### TECHNICAL FIELD

This disclosure relates to dental implants and more specifically to a twist locking mechanism for the attachment of a dental implant and an abutment.

### BACKGROUND

A well-known procedure is the dental restoration of a partially or wholly edentulous patient with artificial dentition. Typically, a dental implant is seated into the bone of a patient's jaw. The dental implant includes a socket, e.g., a bore, which is accessible through the overlying or surrounding gum tissue for receiving and supporting one or more attachments or components which, in turn, are useful to fabricate and support prosthodontic restorations. The dental implant generally includes a threaded bore to receive a retaining screw for holding mating components therein. Dental implant procedures may use a variety of implanting modalities, for example, blade, threaded implant, or smooth push-in implant.

Single tooth restorations present the unique requirement that they must be supported non-rotationally on an underlying abutment. When a prepared natural tooth is the underlying abutment, this requirement is met in the normal course of preparing the abutment with a non-circular cross-section. Likewise, when the underlying abutment is a post fitted onto an implant, this requirement is met by preparing the post with a noncircular cross-section. This latter scenario can be more complicated due to the added connection between the implant and the abutment.

Typically, a dental implant is implanted into the bone of a patient's jaw and comprises a socket, e.g., a bore, which is accessible through the overlying or surrounding gum tissue for receiving and supporting one or more attachments or components which, in turn, are useful to fabricate and support the prosthodontic restoration. Dental implant procedures may use a variety of implanting modalities, for example, blade, threaded implant, or smooth push-in implant.

While numerous design iterations have been marketed, overall there have been three generations of the implant-abutment interface within these assemblies: an external hex implant, an internal connection implant, and a vertical connection assembly. The external hexagonal implant design has a hexagonal shape (or another anti-rotation feature) protruding out of the implant and the corresponding abutment has a female hexagonal receptacle. There is a surface below the hexagonal protrusion on which the abutment is seated. The hexagonal protrusion acts to constrain the abutment from rotating around the longitudinal axis as well as preventing movement on the plane coincident with the implant seating surface. Unfortunately, such an interface has virtually no stability until the screw is introduced and fully seated between the abutment and the implant. The screw is essentially the sole component resisting bending forces.

In contrast, the internal connection implant design has a hexagonal female member (or other anti-rotation feature) extruded into the implant, and the corresponding abutment has a male hexagonal protrusion. The abutment is seated on the same surface as the external hexagonal design, the only difference being that the anti-rotation feature on the implant is located below this surface. The benefit of this system is that it has intrinsic stability without the screw, and then experiences increased stability once the screw is introduced and fully seated. The system responds in a more unified manner to bending forces. While this system has advantages over the external hex implant, the disadvantage (which applies to the external hex as well) is that it is prone to leak at the implant-abutment interface (seating surface) due to "lifting" of the abutment under load that may create an intermittent gap resulting in bacteria penetration and subsequent crestal bone loss.

Another alternative interface is an internal/vertical connection implant assembly where the abutment sits "vertically" within the implant assembly and is supported by the internal sidewalls. In addition to this vertically interfacing aspect, many abutments contain a male anti-rotation feature at the bottom and the corresponding implants have a female receptacle (similar to the internal connection implant design). The main benefits of this design are that the two components effectively wedge together, creating a seal impenetrable to bacteria and the abutment receives added lateral support from the implant due to interaction of the abutment sidewalls with the interior surfaces of the implant. However, such designs suffer from vertical location variability. The accuracy of the fit of the final implant restoration (i.e., crown) is largely dependent on the ability to reliably transfer the location of the implant throughout the multiple steps involved in fabricating the restoration. The currently marketed vertical connection implant systems are susceptible to significant vertical location variability, and subsequent customer dissatisfaction. Location variability is undetectable until the very last step in the restorative process when the patient receives their restoration where it becomes apparent the restoration is too high or too low relative to the original tooth. For example, due to the required manufacturing tolerances, each time an abutment (or other male part) is mated with an implant (or other female part) the initial vertical position is destined to change. Further, once the parts are mated and torque is applied to the screw attaching the abutment to the implant, there is relative motion (or vertical displacement) between the male and female components. The magnitude of this motion is dependent on multiple variables, including but not limited to the screw torque, the surface finishes, and the component specifications.

CH704382A1 discloses a dental restoration system comprising: an implant having a tip and an opposite cylindrical socket, the socket having an interior surface having a sloped rim surface, a cylindrical surface and a plurality of helical grooves each with a vertical and horizontal channel; a mating component having an interface section including a collar having a plurality of radial tabs, the collar being attached to a conical interface surface; wherein each of the tabs slides in the vertical channel of a corresponding one of the plurality of grooves when the mating component is inserted into the implant and each of the tabs fits in the horizontal channel of the groove to lock the mating component in place when the mating component is rotated, and the conical interface contacts the sloped rim surface of the cylindrical socket. CH704382A1 also discloses a corresponding method connecting a mating component to an implant.

Thus, there is a need for an interface between a dental implant and a mating component such as an abutment that locks the abutment in place relative to the implant before the mating screw is installed. There is a further need for an interface between a dental implant and abutment that creates a seal between the two components. There is a further need for an interface between a dental implant and an abutment that positions the abutment at a controlled vertical and angular location relative to the implant.

### BRIEF SUMMARY

The present invention is a dental restoration system according to claim 1. An example of the present disclosure is a dental restoration system including an implant having a tip and an opposite cylindrical socket. The socket has an interior surface having a sloped rim surface and a groove with a vertical and horizontal channel. A mating component has an interface section including a collar having a radial tab. The collar is attached to a conical interface surface. The tab slides in the vertical channel when the mating component is inserted into the implant. The tab fits in the horizontal channel of the groove to lock the mating component in place when the mating component is rotated. The conical interface contacts the sloped rim surface of the cylindrical socket to create a seal when the tab is fit into the horizontal channel.

The foregoing and additional aspects and implementations of the present disclosure will be apparent to those of ordinary skill in the art in view of the detailed description of various embodiments and/or aspects, which is made with reference to the drawings, a brief description of which is provided next.

### BRIEF DESCRIPTION OF THE DRAWINGS

The foregoing and other advantages of the present disclosure will become apparent upon reading the following detailed description and upon reference to the drawings.
FIG. 1 is an exploded perspective view of the implant and abutment with a twist- lock type connection;
FIG. 2 is a cross-section view of the interface between the abutment and the interface;
FIG. 3A is a close-up perspective view of the interface component of the abutment in FIG. 1;
FIG. 3B is a close-up perspective view of the socket interface of the implant in FIG. 1;
FIG. 3C is a close-up perspective view of the implant and the abutment showing the interface between them;
FIG. 4A is a cross-section view of the implant and abutment joined together at the interface;
FIG. 4B is a cross-section view of the implant abutment after the abutment is twisted to create an interlock with the implant;
FIG. 5A is a perspective view of the abutment being inserted into the implant; and
FIG. 5B is a perspective view of the abutment interlocking with the implant after the abutment has been locked in and a seal is created.

While the invention is susceptible to various modifications and alternative forms, specific embodiments have been shown by way of example in the drawings and will be described in detail herein. It should be understood, however, that the invention is not intended to be limited to the particular forms disclosed. Rather, the invention is to cover all modifications, equivalents, and alternatives falling within the scope of the invention as defined by the appended claims.

### DETAILED DESCRIPTION

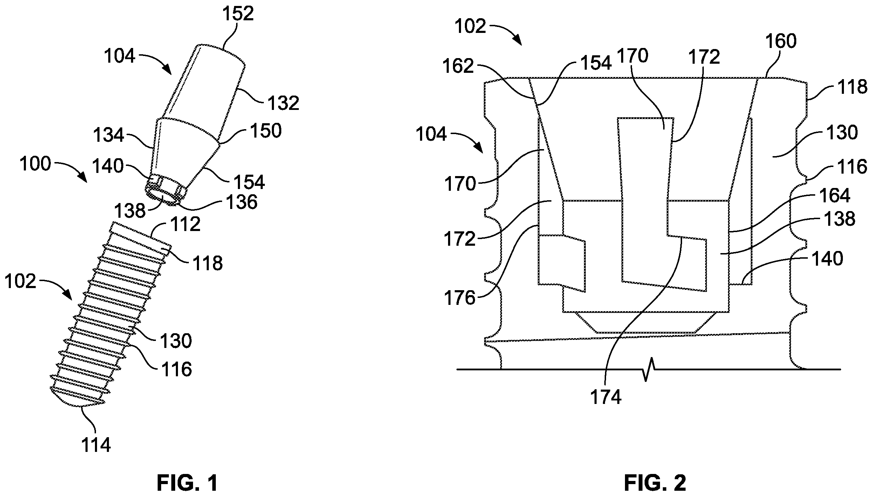

FIG. 1 is an exploded perspective view of the implant and mating component system 100 having a twist-lock type connection. The system 100 includes an implant 102 and a mating component which in this example is an abutment 104. The components shown in FIG. 1 are used in dental restorative processes. As is known, the implant 102 is inserted into the bone of a patient's jaw after a suitable hole is created in the bone. An implant driver tool is used to rotate the implant 102 into the hole and therefore position it in the bone. The abutment 104 may be a standard part or customized to replace the patient's tooth and is attached to the implant 102 after the implant is seated. After the abutment 104 is inserted into the implant 102, the abutment 104 is fixed to the implant 102 via an abutment screw, which may be installed via a screw driver tool. As will be explained below, the interface between the implant 102 and the abutment 104 has a twist-lock connection that keeps the implant 102 and abutment 104 joined and properly aligned for insertion of the abutment screw. This connection provides both controlled vertical location and angular location of the abutment 104 relative to the implant 102. Of course other mating components may rely on the twist lock feature for attachment to the implant 102 for other purposes.

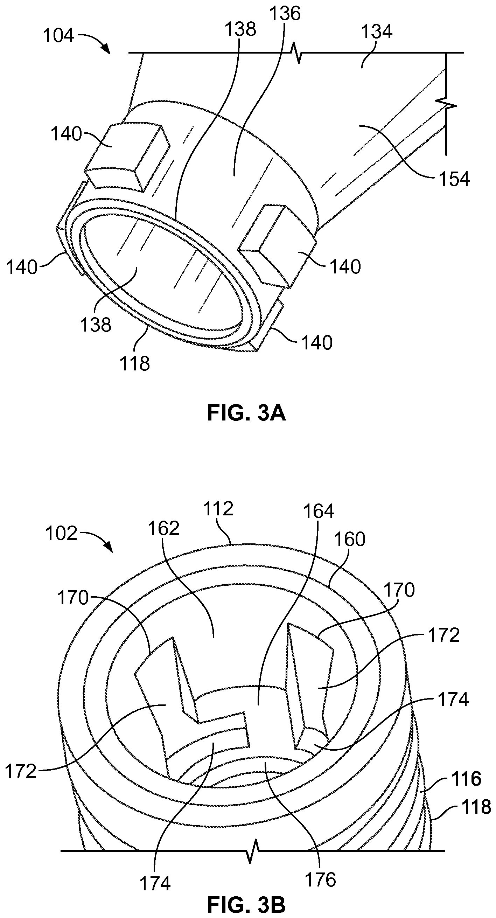

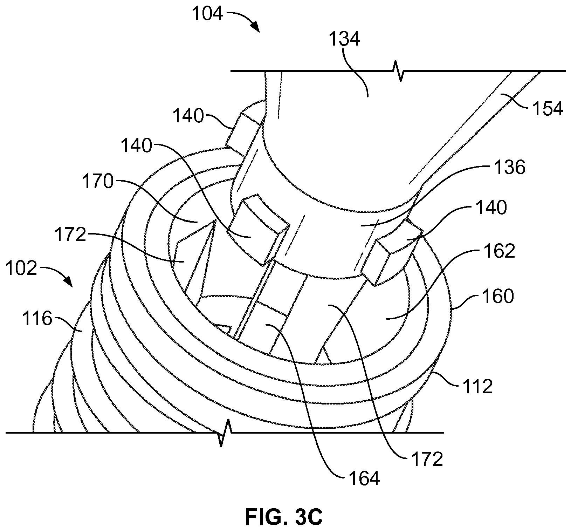

The interface between implant 102 and abutment 104 is further detailed in FIG. 2 and FIGs. 3A-3C where FIG. 2 is a cross-section view of the abutment 104 locked into the implant 102. FIG. 3A is a perspective view of the interface end of the implant 102, FIG. 3B is a perspective view of the interface end the abutment 104 and FIG. 3C is a cross-section perspective view of the assembled implant 102 and the abutment 104.

As shown in FIG. 1, the implant 102 comprises a proximal end 112, a distal end 114 opposite the proximal end 112, and at least one thread 116 disposed therebetween for screwing the implant 102 into the bone of a patient. The distal end 114 ends in a tip which is inserted in the bone when the implant 102 is seated in a patient. The proximal end 112 includes a female interface 118 adapted to guide the abutment 104 in FIG. 1 when seating the abutment 104 in the implant 102. The female interface 118 is a cylindrical socket opposite the distal end 114. The implant 102 also includes an interior bore (not shown) that extends distally from the proximal end 112 toward the distal end 114. The interior bore accommodates an abutment screw to fix the abutment 104 to the implant 102 after the abutment 104 is joined with the implant 102.

The abutment 104 includes a roughly cylindrically shaped post 132 and a stem 134 extending in a relative downward direction from the post 132. The stem 134 includes a male interface portion 136 adapted to be locked into the female interface 118 of the implant 102 when the abutment 104 is assembled with the implant 102. The interface portion 136 has a collar 138 that is sized to be insertable in the female interface 118 of the implant 102. The collar 138 has a series of five radial tabs 140 spaced equidistantly around the outer perimeter of the collar 138. The radial tabs 140 allow the abutment 104 to be locked into the implant 102 when the two components are joined together. In this example, the collar 138 has substantially the same height as the radial tabs 140 but the collar 138 may be longer than the radial tabs 140. The post 132 has a base 150 and an opposite end 152 through which a screw may be inserted to fix the abutment 104 to the implant 102. The stem 134 has a conical surface 154 which is tapered from the base 150 of the post 132 to the collar 138. In this example, the implant 102 is fabricated from commercially pure titanium and the abutment 104 is fabricated from titanium alloy. Other materials such as zirconia or PEEK may be used to fabricate the implant 102 and the abutment 104.

As shown in FIG. 2 and 3B, the female interface 118 of the implant 102 has a circular rim 160, a conical interface surface 162 and an interior cylindrical surface 164. The conical interface surface 162 is a sloped rim cut into the circular rim 160. A series of helical grooves 170 are cut into the conical interface surface 162 and the interior cylindrical surface 164. The helical grooves 170 include a vertical channel 172 and a horizontal locking channel 174. The horizontal locking channel 174 is at an acute angle relative to the vertical channel 172 and is on the interior cylindrical surface 164 below the interface between the cylindrical surface 164 and the conical interface surface 162. The width of the channels 172 and 174 is slightly wider than the radial tabs 140 of the collar 138. In this example, there are five grooves 170 cut into the interior cylindrical surface 164 and correspond to five radial tabs 140 on the abutment 104. An annular ledge 176 is cut on the interior cylindrical surface 164 below the horizontal channels 174. Alternatively, a different number of channels and corresponding radial tabs may be used on the implant 102 and the abutment 104 to create the same type of twist-lock connection interface. Further, although the channels 170 and tabs 140 are spaced at equal radial distances from each other, the spacing may be at other intervals as long as the channels 170 and tabs 140 are in alignment with each other.

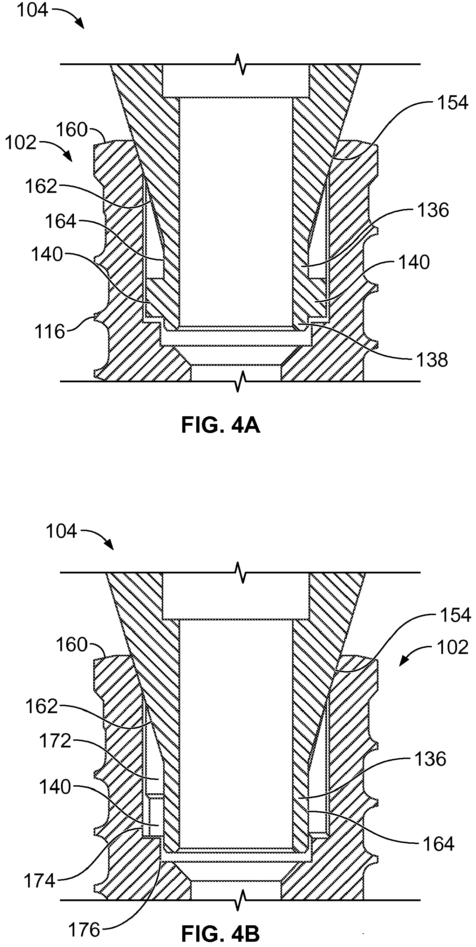

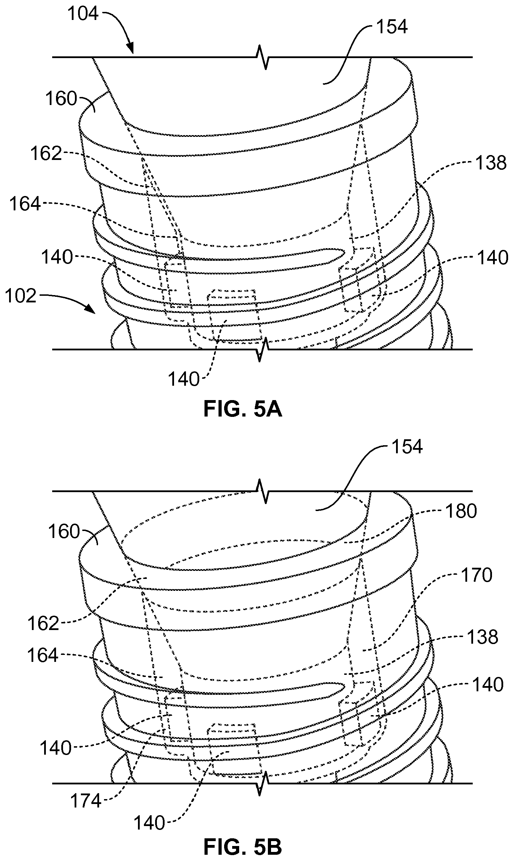

The locking process of attaching the abutment 104 with the implant is shown in FIGs. 4A, 4B, 5A and 5B in conjunction with FIG. 2. FIG. 4A shows a cross-section view of the abutment 104 being lowered in the female interface 118 of the implant 102. FIG. 5A shows a perspective view of the abutment 104 being lowered in the female interface 118 of the implant 102. FIG. 4B shows a cross-section view of the abutment 104 after being locked into the implant 102. FIG. 5B.

The interface created between the female interface 118 of the implant 104 and the interface portion 136 of the abutment 104 locks the abutment 104 in place relative to the implant 102 to allow the attachment screw to be inserted to join the abutment 104 to the implant 102. The implant 102 is first seated in the bone. As shown in FIG. 3C, the abutment 104 is moved over the seated implant 102 to roughly align the radial tabs 140 with the grooves 170. The interface portion 136 of the implant 102 is then lowered into the female interface 118. Since the radial tabs 140 extend from the collar 138, the radial tabs 140 must be aligned with the grooves 170 of the implant 102 in order to lower the abutment 104 into the female interface 118. The radial tabs 140 on the collar 138 are inserted down in the corresponding vertical channels 172 of the grooves 170. The abutment 104 is then lowered into the female interface 118 causing the radial tabs 140 to move in the vertical channel 172 until they contact the bottom of the vertical channel 172 which is joined to the horizontal locking channel 174 as shown in FIGs. 4A and 5A.

The abutment 104 is then twisted or rotated so the radial tabs 140 are moved into the horizontal channels 174 as shown in FIGs. 4B and 5B. The insertion of the radial tabs 140 in the horizontal channels 174 by the rotational motion locks the abutment 104 with the implant 102 and provides the seal between the conical interface 162 of the implant 102 and the conical surface 154 of the abutment 104. As highlighted in FIG. 5B, the conical surface 154 contacts the conical interface 162 of the female interface 118 to create a seal area 180 between the implant 102 and the abutment 104.

As may be shown above, each vertical channel 172 leads to the corresponding helical horizontal channel 174 that provides the retention, anti-rotation and seal of the connection between the abutment 104 and the implant 102 by use of rotation to vertically draw the abutment 104 into final connecting position to the implant 102. Further, the engagement of the abutment 104 within the helical horizontal channel 174 provides predictability for vertical position of the abutment 104 interfacing with the implant 102. Thus, the radial tabs 140 in the final location within the respective horizontal channels 174 positions the abutment 104 at a controlled vertical and angular location relative to the implant 102.

It should be understood that the general interface features of the collar 138 with tabs 140 and the sloped interface surface 154 may be used with any suitable mating component such as a driver, an impression coping, a healing abutment, cover screw, direction/depth indicators or an RFA strut.

While particular implementations and applications of the present disclosure have been illustrated and described, it is to be understood that the present disclosure is not limited to the precise construction and compositions disclosed herein and that various modifications, changes, and variations can be apparent from the foregoing descriptions without departing from the scope of the invention as defined in the appended claims.

## Claims

1. A dental restoration system comprising:
an implant (102) having a tip (114) and an opposite cylindrical socket, the socket having an interior surface having a sloped rim surface (162), a cylindrical surface (164) and a plurality of helical grooves (170) each with a vertical and horizontal channel (172,174), each horizontal channel having a bottom surface inclined at an angle to the horizontal plane;
a mating component (104) having an interface section including a collar (138) having a plurality of radial tabs (140), the collar (138) being attached to a conical interface surface (154);
wherein each of the tabs (140) slides in the vertical channel (172) of a corresponding one of the plurality of grooves (170) when the mating component (104) is inserted into the implant (102) and each of the tabs (140) fits in the horizontal channel (174) of the groove (170) to lock the mating component (104) in place when the mating component (104) is rotated, and the conical interface (154) contacts the sloped rim surface (162) of the cylindrical socket to create a seal when the tabs (140) are each fit into the horizontal channel (174).

2. The system of claim 1, wherein the mating component (104) is an abutment having a stem (134) and an opposite post (132).

3. The system of claim 1, wherein the mating component (104) is a driver.

4. The system of claim 1, wherein the mating component (104) is an impression coping.

5. The system of claim 2, wherein the abutment (104)is fabricated from titanium alloy and the implant (102) is fabricated from commercially pure titanium.

6. The system of claim 1, wherein the collar (138) includes one end attached to the conical interface surface (154) and an opposite end being at substantially the same height as a lower edge of the radial tabs (140).

7. The system of claim 1, wherein the collar (138) includes five tabs (140) and the socket includes five corresponding grooves (170).

## Patentansprüche

1. Dentales Restaurationssystem, umfassend:
ein Implantat (102) mit einer Spitze (114) und einer gegenüberliegenden zylindrischen Buchse, wobei die Buchse eine innere Oberfläche mit einer schrägen Randoberfläche (162), einer zylindrischen Oberfläche (164) und einer Mehrzahl spiralförmiger Rillen (170), die jeweils einen vertikalen und horizontalen Kanal (172, 174) aufweisen, wobei jeder horizontale Kanal eine untere Oberfläche aufweist, die in einem Winkel zu der horizontalen Ebene geneigt ist;
eine zusammenpassende Komponente (104) mit einem Schnittstellenabschnitt, der einen Kragen (138) mit einer Mehrzahl radialer Ansätze (140) aufweist, wobei der Kragen (138) an einer konischen Schnittstellenoberfläche (154) angebracht ist;
wobei jeder der Ansätze (140) in den vertikalen Kanal (172) einer entsprechenden Rille der Mehrzahl von Rillen (170) rutscht, wenn die zusammenpassende Komponente (104) in das Implantat (102) eingeführt wird, und wobei jeder der Ansätze (140) in den horizontalen Kanal (174) der Rille (170) passt, um die zusammenpassende Komponente (104) an der Verwendungsposition zu verriegeln, wenn die zusammenpassende Komponente (104) gedreht wird, und wobei die konische Schnittstelle (154) die schräge Randoberfläche (162) der zylindrischen Buchse berührt, um eine Dichtung zu erzeugen, wenn sich alle Ansätze (140) in dem horizontalen Kanal (174) befinden.

2. System nach Anspruch 1, wobei die zusammenpassende Komponente (104) ein Widerlager mit einem Schaft (134) und einem gegenüberliegenden Stift (132) ist.

3. System nach Anspruch 1, wobei die zusammenpassende Komponente (104) ein Treiber ist.

4. System nach Anspruch 1, wobei die zusammenpassende Komponente (104) eine Abformkappe ist.

5. System nach Anspruch 2, wobei der Widerlager (104) aus einer Titanlegierung besteht, und wobei das Implantat (102) aus handelsüblichem reinem Titan besteht.

6. System nach Anspruch 1, wobei der Kragen (138) ein Ende aufweist, das an der konischen Schnittstellenoberfläche (154) angebracht ist, und ein gegenüberliegendes Ende im Wesentlichen auf der gleichen Höhe wie eine Unterkante der radialen Ansätze (140).

7. System nach Anspruch 1, wobei der Kragen (138) fünf Ansätze (140) aufweist, und wobei die Buchse fünf entsprechende Rillen (170) aufweist.

## Revendications

1. Système de restauration dentaire comprenant :
un implant (102) ayant une pointe (114) et une douille cylindrique opposée, la douille ayant une surface intérieure ayant une surface de bord inclinée (162), une surface cylindrique (164) et une pluralité de rainures hélicoïdales (170) ayant chacune un canal vertical et horizontal (172, 174), chaque canal horizontal ayant une surface inférieure inclinée à un angle par rapport au plan horizontal ;
un composant d'accouplement (104) ayant une section d'interface comprenant un collier (138) ayant une pluralité de pattes radiales (140), le collier (138) étant fixé à une surface d'interface conique (154) ;
chacune des pattes (140) coulissant dans le canal vertical (172) d'une rainure correspondante de la pluralité de rainures (170) lorsque le composant d'accouplement (104) est inséré dans l'implant (102) et chacune des pattes (140) s'insérant dans le canal horizontal (174) de la rainure (170) pour bloquer le composant d'accouplement (104) en place lorsque le composant d'accouplement (104) est tourné, et l'interface conique (154) venant en contact avec la surface de bord inclinée (162) de la douille cylindrique pour créer un joint lorsque les pattes (140) sont chacune insérées dans le canal horizontal (174).

2. Système selon la revendication 1, le composant d'accouplement (104) étant une butée ayant une tige (134) et un pilier opposé (132).

3. Système selon la revendication 1, le composant d'accouplement (104) étant un dispositif d'entraînement.

4. Système selon la revendication 1, le composant d'accouplement (104) étant une chape de transfert.

5. Système selon la revendication 2, la butée (104) étant fabriquée en alliage de titane et l'implant (102) étant fabriqué en titane commercialement pur.

6. Système selon la revendication 1, le collier (138) comprenant une extrémité fixée à la surface d'interface conique (154) et une extrémité opposée se trouvant sensiblement à la même hauteur qu'un bord inférieur des pattes radiales (140).

7. Système selon la revendication 1, le collier (138) comprenant cinq pattes (140) et la douille comprenant cinq rainures (170) correspondantes.
